(19)

Europäisches
Patentamt
European
Patent Office
Office européen
des brevets

(11) **EP 4 319 125 A1**

(12) **EUROPEAN PATENT APPLICATION**
published in accordance with Art. 153(4) EPC

(43) Date of publication:
**07.02.2024 Bulletin 2024/06**

(21) Application number: **22775894.3**

(22) Date of filing: **08.02.2022**

(51) International Patent Classification (IPC):
*H04N 5/225* (2006.01)    *H04N 9/73* (2023.01)
*G03B 15/05* (2021.01)    *G03B 30/00* (2021.01)
*H04M 1/22* (2006.01)

(52) Cooperative Patent Classification (CPC):
**G03B 15/05; G03B 30/00; H04M 1/22; H04N 9/73; H04N 23/00**

(86) International application number:
**PCT/KR2022/001880**

(87) International publication number:
**WO 2022/203192 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.03.2021 KR 20210038173**

(71) Applicant: Samsung Electronics Co., Ltd.
Suwon-si, Gyeonggi-do 16677 (KR)

(72) Inventors:
• **SEO, Dongil**
  **Suwon-si Gyeonggi-do 16677 (KR)**
• **HONG, Hyeonseok**
  **Suwon-si Gyeonggi-do 16677 (KR)**
• **KIM, Sungwon**
  **Suwon-si Gyeonggi-do 16677 (KR)**
• **SEO, Jungpa**
  **Suwon-si Gyeonggi-do 16677 (KR)**

(74) Representative: **Arnold & Siedsma**
**Bezuidenhoutseweg 57**
**2594 AC The Hague (NL)**

(54) **DEVICE CAPABLE OF SIMULTANEOUSLY PERFORMING LIGHTING FUNCTION AND LIGHT SOURCE DETECTION FUNCTION THROUGH COMMON HOLE**

(57)    A light source detection device may include: a cover including a common hole, a main condensing lens connected to the cover and covering the common hole, a printed circuit board provided inside the cover, a flash arranged on the printed circuit board at a position parallel to a central axis of the common hole and configured to radiate light to an outside through the common hole, and a plurality of light receiving elements comprising light receiving circuitry arranged on the printed circuit board symmetrically about the flash.

FIG.4B

EP 4 319 125 A1

## Description

## BACKGROUND

### 1. Field

The disclosure relates to a device capable of simultaneously performing a lighting function and a light source detection function through a common hole.

### 2. Description of Related Art

In general, color temperatures are different according to light source types. The human eye may recognize white colors as the same although adjacent illumination environments, or the light sources, are changed. For example, the human eye may recognize a white color seen under a fluorescent light and a white color seen under an incandescent light as the same color.

However, since an image sensor is implemented to exactly reproduce a reflected light of a given color temperature, the image sensor may not actively apply and reflect the color temperature of the light source. A white color detected by the image sensor is changed as the light source is changed. For example, a white object takes on a red color in the light source having a low color temperature, and the white object takes on a blue color in the light source having a high color temperature. In order to compensate for a color difference generated by the light sources, most camera devices that include an image sensor perform a digital image processing called Auto White Balance (AWB).

An AWB processing method is implemented in a manner of estimating a degree of the color difference by the light source from the image obtained through the image sensor, and determining a color gain for each color of the image sensor in order to compensate for the color difference. For example, known representative AWB processing methods include a maximum red, green, and blue (RGB) scheme of estimating a white color based on maximum RGB values in an input image, a gray world scheme of determining an average RGB value of an input color image as a gray color and estimating a reference white color using the gray color, and a method of estimating the reference white color using a neural network.

To improve the AWB accuracy, a method of determining light source information using an external sensor (ambient light sensor (ALS)) in addition to image information input to a camera device is used. Since different types of light sources physically have different spectrums, the AWB accuracy may be improved using the external sensor. For example, if the ratio of infrared components in a spectrum is known, a light source may be identified. With the understanding of the characteristics of a light source, the ratio of infrared components may be determined to be an AWB index value, whereby whether a capturing environment of a camera operator is indoors or outdoors may be determined.

An external sensor may determine an AWB index value. When an AWB function of a camera application is on, whether a current location is indoors or outdoors may be determined instantaneously using an AWB index value. When an object with a color similar to that of a light source is captured in an outdoor environment corresponding to an indoor brightness or in an indoor environment corresponding to an outdoor brightness, an AWB algorithm may recognize the color of the object as the color of the light source, causing color distortion. In this situation, the camera application may distinguish indoors and outdoors using an AWB index value obtained through an external sensor. For example, the camera application may discriminate between sunlight and artificial light sources.

A cover has a flash hole for assisting with the radiation of light from a light emitting chip in charge of a flash to the outside. In general, to secure the performance of a flash, a flash hole is provided in parallel with a light emitting chip. In other words, a central axis of the flash hole and a central axis (optical axis) of the light emitting chip are arranged in parallel as much as possible to secure maximum symmetry of the light emission performance of the flash. Even if the external sensor is to be provided in the camera module, it may be difficult to provide a separate hole for the external sensor due to various issues. The external sensor may be arranged at a predetermined (e.g., specified) distance apart from the central axis of the flash hole and receive light through the flash hole. In this case, an angle of view of the light emitted from the light emitting chip to the outside and an angle of view of the external sensor may not match, and light source information of the external source for a predetermined direction may not be detected.

## SUMMARY

Embodiments of the disclosure provide a light source characteristic detection device that may improve light source detection capability.

According to various example embodiments, a device capable of simultaneously performing a lighting function and a light source detection function through a common hole may include: a cover including a common hole; a main condensing lens connected to the cover and covering the common hole; a printed circuit board provided inside the cover; a flash arranged on the printed circuit board at a position parallel to a central axis of the common hole and configured to radiate light to an outside through the common hole; and a plurality of light receiving elements including light receiving circuitry arranged on the printed circuit board symmetrically about the flash.

According to various example embodiments, a device capable of simultaneously performing a lighting function and a light source detection function through a common hole may include: a printed circuit board arranged in a cover; a flash arranged on the printed circuit board; and a plurality of light receiving elements comprising light receiving circuitry arranged on the printed circuit board symmetrically about the flash and configured to receive light through the common hole.

According to various example embodiments, a device capable of simultaneously performing a lighting function and a light source detection function through a common hole may include: a cover including a common hole; a main condensing lens connected to the cover and covering the common hole; a printed circuit board provided inside the cover; a flash arranged on the printed circuit board at a position parallel to a central axis of the common hole and configured to radiate light to an outside through the common hole; a plurality of first light receiving elements comprising light receiving circuitry provided at positions spaced apart from the flash in a first direction; a plurality of second light receiving elements comprising light receiving circuitry provided at positions spaced apart from the flash in a second direction opposite to the first direction; and a plurality of filters covering a half of the plurality of first light receiving elements and a half of the second light receiving elements and configured to pass light of a visible band.

According to various example embodiments, a light source characteristic detection device may receive light using a plurality of photodiodes provided symmetrically about a light-emitting chip, thereby having an angle of view that is symmetric about a flash hole even when an additional hole for an external sensor is not separately provided.

According to example embodiments, a light source characteristic detection device may determine a position and information of a light source.

## BRIEF DESCRIPTION OF THE DRAWINGS

The above and other aspects, features, and advantages of certain embodiments of the present disclosure will be more apparent from the following detailed description, taken in conjunction with the accompanying drawings, in which:

FIG. 1 is a block diagram illustrating an example electronic device in a network environment according to various embodiments;

FIG. 2 is a block diagram illustrating an example configuration of a camera module according to various embodiments;

FIG. 3 is a block diagram illustrating an example configuration of an image processing apparatus according to various embodiments;

FIG. 4A is a diagram illustrating a rear surface of a device for simultaneously performing a lighting function and a light source detection function through a common hole through a common hole according to various embodiments;

FIG. 4B is a cross-sectional view taken along a line I-I of FIG. 4A according to various embodiments;

FIG. 4C is a diagram illustrating light receiving areas of a plurality of light receiving elements according to various embodiments;

FIG. 5A is a diagram illustrating a printed circuit board (PCB), a flash, and a plurality of light receiving elements according to various embodiments;

FIG. 5B is a cross-sectional view taken along a line II-II of FIG. 5A according to various embodiments;

FIG. 5C is a block diagram illustrating an example configuration of a light source detection device according to various embodiments;

FIG. 6A is a diagram illustrating a PCB, a flash, and a plurality of light receiving elements according to various embodiments;

FIG. 6B is a diagram illustrating light receiving areas of a plurality of light receiving elements according to various embodiments;

FIGS. 7, 8 and 9 are each a diagrams illustrating examples of a PCB, a flash, and a plurality of light receiving elements according to various embodiments;

FIG. 10A is diagram illustrating a PCB, a flash, and a plurality of light receiving elements according to various embodiments;

FIG. 10B is a cross-sectional view taken along a line III-III of FIG. 10A according to various embodiments;

FIG. 10C is a cross-sectional view taken along a line IV-IV of FIG. 10A according to various embodiments;

FIG. 11 is a cross-sectional view of a light source detection device according to various embodiments;

FIG. 12A is a diagram illustrating a PCB, a flash, and a plurality of light receiving elements according to various embodiments;

FIG. 12B is a cross-sectional view of a light source detection device according to various embodiments;

FIG. 13 is a diagram illustrating a PCB, a flash, and a plurality of light receiving elements according to various embodiments;

FIG. 14 is a cross-sectional view illustrating a subcondensing lens, a plurality of lenses, and a plurality of light receiving elements according to various embodiments; and

FIG. 15 is diagram illustrating a PCB, a flash, and a plurality of light receiving elements according to various embodiments.

## DETAILED DESCRIPTION

Hereinafter, various example embodiments will be described in greater detail with reference to the accompanying drawings. When describing the example embodiments with reference to the accompanying drawings, like reference numerals refer to like elements and a repeated description related thereto may not be repeated.

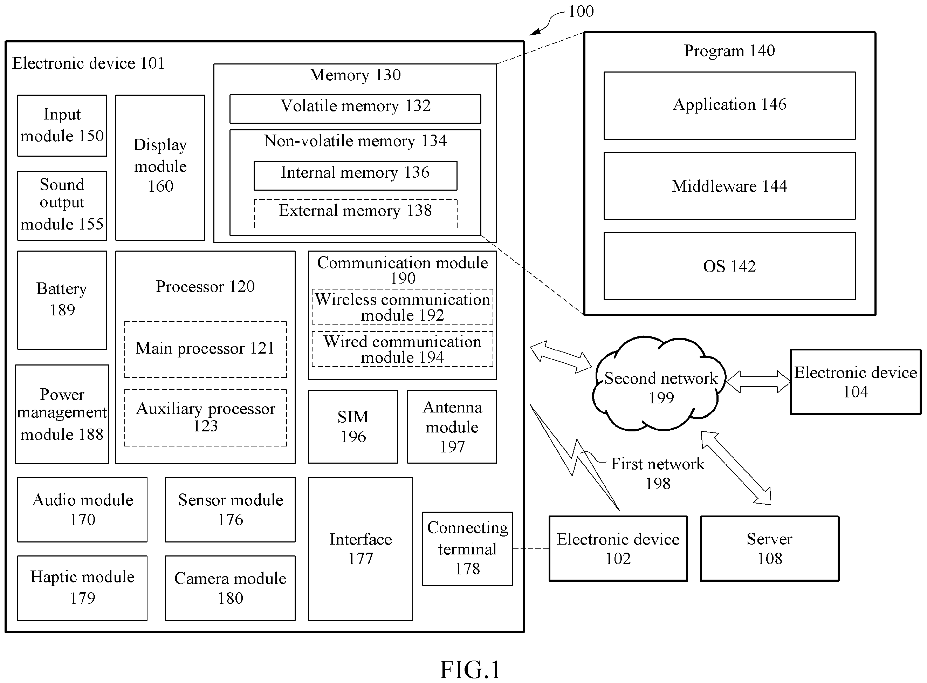

FIG. 1 is a block diagram illustrating an example electronic device 101 in a network environment 100 according to various embodiments.

Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an example embodiment, the electronic device 101 may communicate with the electronic device 104 via the server 108. According to an example embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various example embodiments, at least one (e.g., the connecting terminal 178) of the above components may be omitted from the electronic device 101, or one or more other components may be added in the electronic device 101. In various example embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an example embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an example embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to an example embodiment, the auxiliary processor 123 (e.g., an ISP or a CP) may be implemented as a portion of another component (e.g., the camera module 180 or the communication module 190) that is functionally related to the auxiliary processor 123. According to an example embodiment, the auxiliary processor 123 (e.g., an NPU) may include a hardware structure specified for artificial intelligence (AI) model processing. An AI model may be generated by machine learning. Such learning may be performed by, for example, the electronic device 101 in which an artificial intelligence model is executed, or performed via a separate server (e.g., the server 108). Learning algorithms may include, but are not limited to, for example, supervised learning, unsupervised learning, semi-supervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The artificial intelligence model may additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and an external memory 138.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an example embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control a corresponding one of the display, the hologram device, and the projector. According to an example embodiment, the display device 160 may include a touch sensor adapted to sense a touch, or a pressure sensor adapted to measure an intensity of a force incurred by the touch.

The audio module 170 may convert a sound into an electric signal or vice versa. According to an example embodiment, the audio module 170 may obtain the sound via the input device 150 or output the sound via the sound output device 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an example embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an example embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an example embodiment, the haptic module 179 may include, for example, a motor, a piezoelectric element, or an electric stimulator.

The camera module 180 may capture a still image and moving images. According to an example embodiment, the camera module 180 may include one or more lenses, image sensors, ISPs, or flashes.

The power management module 188 may manage power supplied to the electronic device 101. According to an example embodiment, the power management module 188 may be implemented as, for example, at least a part of a power management integrated circuit (PMIC).

The battery 189 may supply power to at least one component of the electronic device 101. According to an example embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an example embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an example embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an example embodiment, the antenna module 197 may include an antenna including a radiating element including a conductive material or a conductive pattern formed in or on a substrate (e.g., a printed circuit board (PCB)). According to an example embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an example embodiment, another component (e.g., a radio frequency integrated circuit (RFIC)) other than the radiating element may be additionally formed as a part of the antenna module 197.

According to various example embodiments, the antenna module 197 may form a mmWave antenna module. According to an example embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an example embodiment, all or some of operations to be executed by the electronic device 101 may be executed at one or more of the external electronic devices 102, 104, and 108. For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another example embodiment, the external electronic device 104 may include an Internet-of-things (IoT) device. The server 108 may be an intelligent server using machine learning and/or a neural network. According to an example embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various example embodiments may be one of various types of electronic devices. The electronic device may include, for example, a portable communication device (e.g., a smartphone), a computer device, a portable multimedia device, a portable medical device, a camera, a wearable device, a home appliance device, or the like. According to an example embodiment of the disclosure, the electronic device is not limited to those described above.

It should be appreciated that various example embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "A, B, or C," each of which may include any one of the items listed together in the corresponding one of the phrases, or all possible combinations thereof. Terms such as "first", "second", or "first" or "second" may simply be used to distinguish the component from other components in question, and may refer to components in other aspects (e.g., importance or order) is not limited. It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various example embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an example embodiment, the module may be implemented in a form of an application-specific integrated circuit (ASIC).

Various example embodiments as set forth herein may be implemented as software (e.g., the program 140) including one or more instructions that are stored in a storage medium (e.g., an internal memory 136 or an external memory 138) that is readable by a machine (e.g., the electronic device 101) For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. The "non-transitory" storage medium is a tangible device, and may not include a signal (e.g., an electromagnetic wave), but this term does not differentiate between where data is semi-permanently stored in the storage medium and where the data is temporarily stored in the storage medium.

According to an example embodiment, a method according to various example embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various example embodiments, each component (e.g., a module or a program) of the above-described components may include a single entity or multiple entities, and some of the multiple entities may be separately disposed in different components. According to various example embodiments, one or more of the above-described components may be omitted, or one or more other components may be added. Alternatively or additionally, a plurality of components (e.g., modules or programs) may be integrated into a single component. In such a case, according to various example embodiments, the integrated component may still perform one or more functions of each of the plurality of components in the same or similar manner as they are performed by a corresponding one of the plurality of components before the integration. According to various example embodiments, operations performed by the module, the program, or another component may be carried out sequentially, in parallel, repeatedly, or heuristically, or one or more of the operations may be executed in a different order or omitted, or one or more other operations may be added.

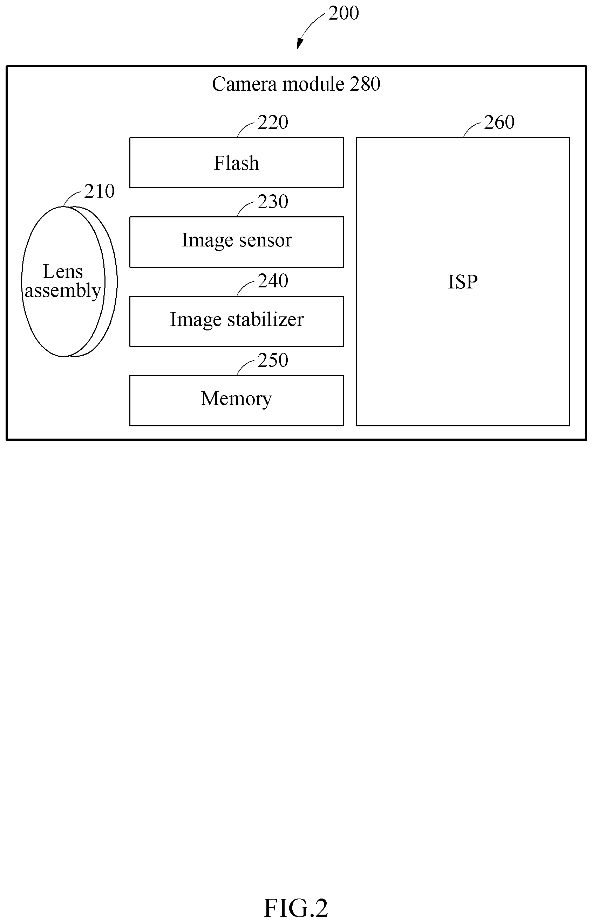

FIG. 2 is a block diagram 200 illustrating an example configuration of a camera module 180 according to various embodiments.

Referring to FIG. 2, a camera module 280 (e.g., the camera module 180 of FIG. 1) may include a lens assembly (e.g., including a lens) 210, a flash 220, an image sensor 230, an image stabilizer (e.g., including image stabilizing circuitry) 240, a memory 250 (e.g., a buffer memory), or an image signal processor (ISP) (e.g., including processing circuitry) 260.

The lens assembly 210 may collect light emitted from an object which is a target of which an image is to be captured. The lens assembly 210 may include one or more lenses. According to an example embodiment, the camera module 280 may include a plurality of lens assemblies 210. In this case, the camera module 280 may include, for example, a dual camera, a 360-degree camera, or a spherical camera. A portion of the lens assemblies 210 may have the same lens properties (e.g., an angle of view, a focal length, an auto focus, an f number, or an optical zoom), or at least one of the lens assemblies 210 may have one or more lens properties that are different from those of other lens assemblies. The lens assembly 210 may include, for example, a wide-angle lens or a telephoto lens.

The flash 220 may emit light to be used to enhance light emitted or reflected from the object. According to an example embodiment, the flash 220 may include, for example and without limitation, one or more light emitting diodes (LEDs) (e.g., a red-green-blue (RGB) LED, a white LED, an infrared (IR) LED, or an ultraviolet (UV) LED), a xenon lamp, or the like.

The image sensor 230 may obtain an image corresponding to the object by converting light emitted or reflected from the object and transmitted through the lens assembly 210 into an electrical signal. According to an example embodiment, the image sensor 230 may include, for example, and without limitation, at least one image sensor selected from among image sensors having different properties, such as, for example, an RGB sensor, a black and white (BW) sensor, an IR sensor, a UV sensor, a plurality of image sensors having the same property, a plurality of image sensors having different properties, or the like. Each image sensor included in the image sensor 230 may be implemented using, for example, and without limitation, a charged coupled device (CCD) sensor or a complementary metal-oxide-semiconductor (CMOS) sensor, or the like.

The image stabilizer 240 may include various image stabilizing circuitry and move at least one lens included in the lens assembly 210 or the image sensor 230 in a specific direction, or control an operation characteristic of the image sensor 230, in response to a movement of the camera module 180 or the electronic device 101 including the camera module 180. For example, the image stabilizer 240 may adjust a read-out timing. This may compensate for at least a portion of a negative effect of the movement on an image to be captured. According to an example embodiment, the image stabilizer 240 may sense such a movement of the camera module 280 or the electronic device 101 using a gyro sensor (not shown) or an acceleration sensor (not shown) disposed inside or outside the camera module 280. According to an example embodiment, the image stabilizer 240 may be implemented as, for example, an optical image stabilizer. The memory 250 may temporarily store therein at least a portion of the image obtained through the image sensor 230 for a subsequent image processing operation. For example, when image acquisition is delayed by a shutter or a plurality of images is obtained at a high speed, an obtained original image (e.g., a Bayer-patterned image or a high-resolution image) may be stored in the memory 250 and a copy image (e.g., a low-resolution image) corresponding the original image may be previewed through the display module 160. Subsequently, when a specified condition (e.g., a user input or a system command) is satisfied, at least a portion of the original image stored in the memory 250 may be obtained and processed by, for example, the ISP 260. According to an example embodiment, the memory 250 may be configured as at least a part of the memory 130 or as a separate memory operated independently of the memory 130.

The ISP 260 may include various processing circuitry and perform one or more image processing operations on an image obtained through the image sensor 230 or an image stored in the memory 250. The image processing operations may include, for example, depth map generation, three-dimensional (3D) modeling, panorama generation, feature point extraction, image synthesis, or image compensation (e.g., noise reduction, resolution adjustment, brightness adjustment, blurring, sharpening, or softening.

Additionally or alternatively, the ISP 260 may control at least one of the components (e.g., the image sensor 230) included in the camera module 280. For example, the ISP 260 may control an exposure time, a read-out timing, and the like. The image processed by the ISP 260 may be stored again in the memory 250 for further processing, or be provided to an external component (e.g., the memory 130, the display module 160, the electronic device 102, the electronic device 104, or the server 108) of the camera module 280 (e.g., the camera module 180 of FIG. 1). According to an example embodiment, the ISP 260 may be configured as at least a part of a processor (e.g., the processor 120 of FIG. 1) or as a separate processor operated independently of the processor. When the ISP 260 is configured as a processor separate from the processor, at least one image processed by the ISP 260 may be displayed as it is without a change or be displayed through a display module (e.g., the display module 160 of FIG. 1) after additional image processing is performed by the processor.

According to an example embodiment, an electronic device (e.g., the electronic device 101 of FIG. 1) may include a plurality of camera modules 280 having different properties or functions. In this case, for example, at least one of the camera modules 280 may be a wide-angle camera, and at least another one of the camera modules 280 may be a telephoto camera. Similarly, at least one of the camera modules 280 may be a front camera, and at least another one of the camera modules 280 may be a rear camera.

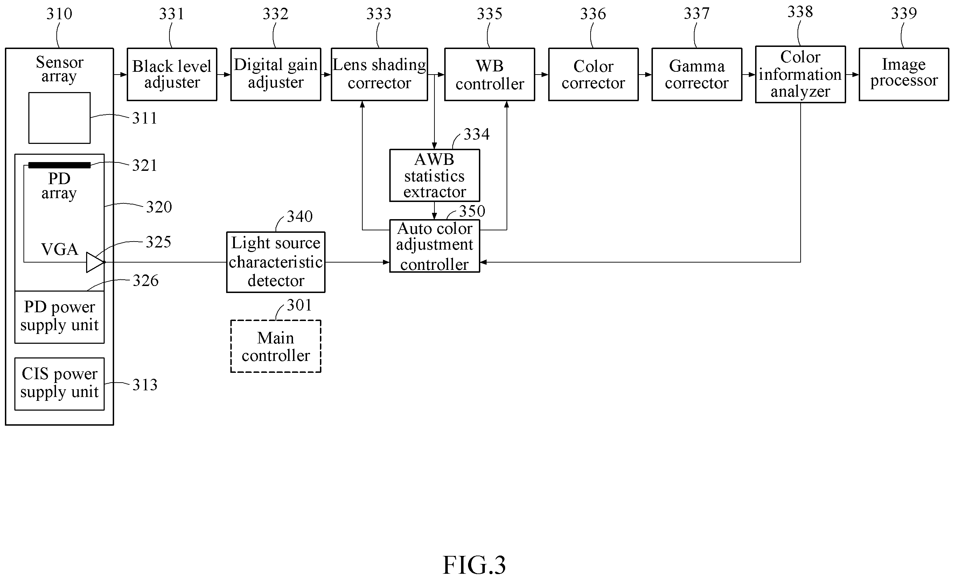

FIG. 3 is a block diagram illustrating an example configuration of an image processing apparatus according to various embodiments.

Referring to FIG. 3, a camera module (e.g., the camera module 180 of FIG. 1 or the camera module 280 of FIG. 2) according to various example embodiments includes a main controller (e.g., including various processing and/or control circuitry) 301, an image sensor module (e.g., including at least one image sensor) 310, a light receiving module (e.g., including light receiving circuitry) 320, a black level adjuster (e.g., including various circuitry and/or executable program instructions) 331, a digital gain adjuster (e.g., including various circuitry and/or executable program instructions) 332, a lens shading corrector (e.g., including various circuitry and/or executable program instructions) 333, an AWB statistics extractor (e.g., including various circuitry and/or executable program instructions) 334, a white balance (WB) controller (e.g., including various circuitry and/or executable program instructions) 335, a color corrector (e.g., including various circuitry and/or executable program instructions) 336, a gamma corrector (e.g., including various circuitry and/or executable program instructions) 337, a color information analyzer (e.g., including various circuitry and/or executable program instructions) 338, an image processor (e.g., including image processing circuitry) 339, a light source characteristic detector (e.g.,

including various circuitry and/or executable program instructions) 340, and an auto color adjustment controller (e.g., including various circuitry and/or executable program instructions) 350.

The main controller 301 is connected to the image sensor module 310, the light receiving module 320, the black level adjuster 331, the digital gain adjuster 332, the lens shading corrector 333, the AWB statistics extractor 334, the WB controller 335, the color corrector 336, the gamma corrector 337, the color information analyzer 338, the image processor 339, the light source characteristic detector 340, and the auto color adjustment controller 350, and controls the whole drive. For example, the main controller 301 may include various processing and/or control circuitry and provides a control signal for controlling an operating power of each functional unit, a timing signal of the image sensor arranged by the unit of a pixel, a sensor control signal, etc.

The image sensor module 310 may include various sensors and transforms an optical signal projected through a camera lens into an electric signal, and generates an image signal (e.g., a video signal) for expressing a color of each pixel included in the image. Herein, image signals indicate output values (R, G, and B) of the unit of the pixel of the image sensor module 310, and the image is an image formed by combining the image signals of the unit of the pixel. For example, the image may be a frame included in a picture or a dynamic image.

The image sensor module 310 includes an image sensor array 311 including a plurality of image sensors suitably arranged for the resolution of the image, and a power supply unit (e.g., a power supply) 313 for supplying an operating power of the image sensor module 310. The image sensor array 311 is controlled by the timing signal and the sensor control signal, and the image signal of the image sensor array 311 is output to the black level adjuster 331, according to the timing signal.

The black level adjuster 331 receives an input of an offset corresponding to a black level adjustment value to perform the black level adjustment for the image signal. The black level may be adjusted through a compensation by an exposure time or by a generalized equation after forcibly subtracting the offset from the image signals (R, G, and B). As another example, the black level for the image signals (R, G, and B) may be adjusted by a predetermined adjustment table. Meanwhile, the offset may be determined by a premeasured black level. The black level may be measured by the image signal output in a state where the light is shaded so that it is not incident through the lens.

The image signal, for which the black level has been adjusted, is input to the digital gain adjuster 332, and the digital gain adjuster 332 controls the brightness such that the brightness of the image signal, for which the black level has been adjusted, remains constant using, for example, an Auto Exposure (AE) algorithm.

The lens shading corrector 333 is a block including various circuitry and/or executable program instructions for correcting a lens shading phenomenon, in which light amounts of a center area and an edge area of the image are different from each other, and receives an input of a lens shading setting value from the auto color adjustment controller 350 to correct colors of the center area and the edge area of the image. Further, the lens shading corrector 333 receives shading variables that are set differently according to the types of the light sources from the auto color adjustment controller 350, and processes the lens shading of the image to correspond to the received variables. Therefore, the lens shading corrector 333 may perform the lens shading processing by applying a different degree of the shading according to the types of the light sources.

The AWB statistics extractor 334 may include various circuitry and/or executable program instructions and extracts a statistical value required for an auto color adjustment algorithm from the image and then provides the auto color adjustment controller 350 with the statistical value, to correspond to the WB of the image.

The WB controller 335 may include various circuitry and/or executable program instructions and controls a gain level of the image signal such that a white object may be reproduced as an exact white color. The WB controller 335 performs a correction of the WB by multiplying the signals R, G, and B of the image signal by gain values (gain G (GG), gain R (GR), and gain B (GB)), respectively. The gain values (GR, GG, and GB) are determined by the auto color adjustment controller 350.

The color corrector 336 may include various circuitry and/or executable program instructions and performs a color correction of an input image signal through an operation of a color correction matrix. For example, the color corrector 336 may perform the color correction using an operation in Equation 1 below, in order for the image sensor to restore colors of a captured image by removing interference between R, G, and B channels from the input R, G, and B-channel signals.

[Equation 1]

$$\begin{pmatrix} R' \\ G' \\ B' \end{pmatrix} = CCM \begin{pmatrix} R \\ G \\ B \end{pmatrix}$$

In Equation 1, R, G, and B are outputs for each channel of red, green, and blue of the image sensor, R', G', and B' are signals for each channel of red, green, and blue, in which the interference between the channels of R, G, and B is minimized, and CCM is a Color Correction Matrix that is a $3 \times 3$ matrix having a minimized interference between the R, G, and B channels.

In general, a gamma is a measure indicating a state of a contrast, and refers to an inclination of a characteristic curve, specifically, a change in concentration/a change in an exposure amount. Further, a display device such as a Cathode Ray Tube (CRT) has a non-linear relation between an electric beam current and an input voltage of the image signal, and a linear relation between the beam current and the brightness of the image. For example, the brightness of the image for the input voltage of the image signal is non-linear. The gamma corrector 337 may include various circuitry and/or executable program instructions and performs a gamma correction for the standard image signal in consideration of the non-linear characteristic of the display device so that a final image signal has a linear characteristic. The gamma corrector 337 corrects the non-linear characteristic of the display device.

The image processor 339 may include various image processing circuitry and performs image processing for the image signal to form an image from the image signal. The formed image is displayed through a display or stored in a memory.

The light receiving module 320 is arranged close to the image sensor module 310, particularly close to the image sensor array 311, includes various light receiving circuitry and detects an optical signal of an external light source. The optical signal detected by the light receiving module 320 is output to the light source characteristic detector 340 to be used for analysis of the light source characteristic. For example, the light receiving module 320 includes at least a plurality of light receiving elements 321, a variable gain amplifier (VGA) 325 for controlling a gain of an output value of the plurality of light receiving elements 321, and a power supply unit 326 for supplying an operating power of the light receiving module 320.

When the illumination intensity is measured using the light detected by the plurality of light receiving elements 321, the light receiving module 320 may measure the illumination intensity of a visible light area separately. For example, the light receiving module 320 may further include an optical filter for passing a wavelength of the visible light area at a front end of a portion of the plurality of light receiving elements 121, in order to detect the illumination intensity of the visible light area. The optical filter may directly coat a portion of the light receiving elements 321 or may be provided as a separate structure. Further, although the light receiving module 320 detects the illumination intensity of the visible light area in an example embodiment, the light receiving module 320 is not limited thereto. For example, the light receiving module 320 may detect the illumination intensity of an infrared light area. Accordingly, the light receiving module 320 may further include an optical filter for passing a wavelength of the infrared light area at a front end of a portion of the light receiving elements 321.

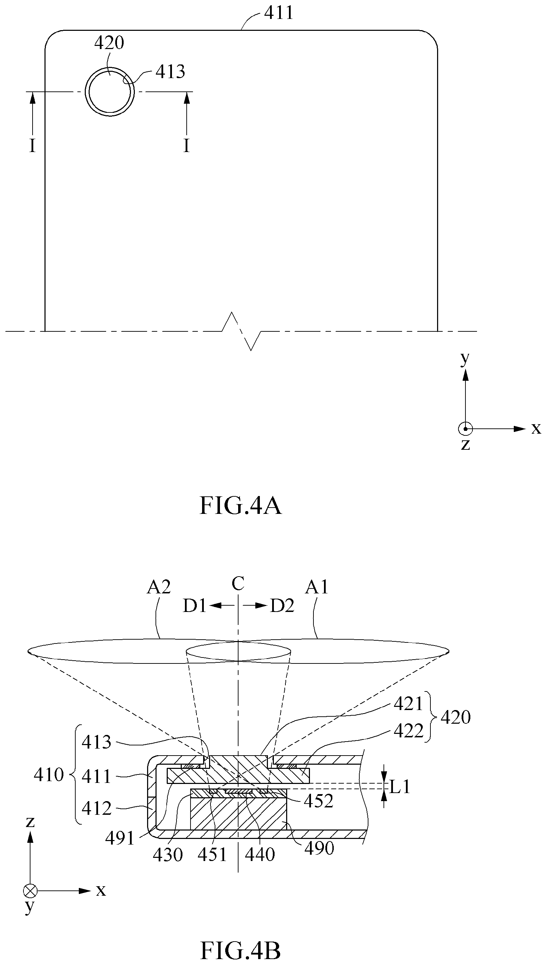

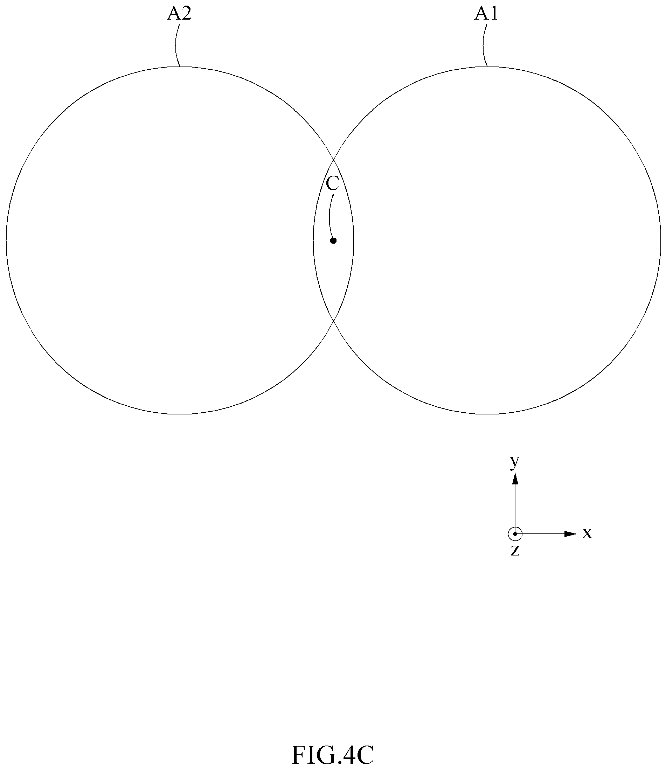

FIG. 4A is a diagram illustrating a portion of a rear surface of a device for simultaneously performing a lighting function and a light source detection function through a common hole (hereinafter, referred to as a "light source detection device") through a common hole according to various embodiments, FIG. 4B is a cross-sectional view taken along a line I-I of FIG. 4A according to various embodiments, and FIG. 4C is a diagram illustrating light receiving areas of a plurality of light receiving elements according to various embodiments.

Referring to FIGS. 4A, 4B and 4C, a light source detection device may detect an external light source and determine a type and/or a position of the external light source. The light source detection device may include, for example, one component of the sensor module 176 of FIG. 1. The light source detection device may have a function to detect an external light source and a lighting function. The light source detection device may determine the type and/or the position of the external light source by analyzing light from the external light source, while lighting the outside through a flash.

The light source detection device may include a cover 410, a main condensing lens 420 connected to the cover 410, an interposer 490 arranged inside of the cover 410, a PCB 430 arranged on the interposer 490, a flash 440 (e.g., the flash 220 of FIG. 2) arranged on the PCB 430, a plurality of light receiving elements 451 and 452 (e.g., the plurality of light receiving elements 321) arranged on the PCB, and an adhesive layer 491 for connecting the main condensing lens 420 to an inner surface of the cover 410.

The cover 410 may form an external appearance of an electronic device (e.g., the electronic device 101 of FIG. 1). The cover 410 may include a back cover 411 and a front cover 412 that are coupled to each other, and a common hole 413 formed through the back cover 411. The back cover 411 may form a rear side of the electronic device, and the front cover 412 may form a front side of the electronic device. In the front cover 412 may be arranged a display module (e.g., the display module 160 of FIG. 1) and a camera module (e.g., a lens of a front camera of the plurality of camera modules 280 of FIG. 2). A camera module (e.g., a rear camera among the plurality of camera modules 208 of FIG. 2) and a flash (e.g., the flash 220 of FIG. 2) may be arranged on the back cover 412.

The back cover 411 and the front cover 412 may be separately manufactured in a decoupled state. The back cover 411 and the front cover 412 may be coupled in a state in which all the components of the electronic device are assembled. For example, all the components may be arranged in the front cover 412 and then, the back cover 411 may be coupled to the front cover 412. As another example, all the components may be arranged in the back cover 411 and then, the front cover 412 may be coupled to the back cover 411. As another example, the cover 410 may be integrally formed.

The common hole 413 may provide a path through which the flash 440 may radiate light to the outside. The common hole 413 may provide a path through which the plurality of light receiving elements 451 and 452 may receive light from the outside. In other words, the light source detection device may perform the lighting function through the common hole 413 and simultaneously perform the light source detection function through the common hole 413. The common hole 413 is illustrated in a circular shape, but the shape of the common hole 413 is not limited thereto. The common hole 413 may have, for example, an elliptical shape or a polygonal shape. A central axis C of the common hole 413 refers to an imaginary line passing through the center of the common hole 413 and facing a height direction (z-axis direction) of the light source detection device. When the common hole 413 has a circular shape, the center of the common hole 413 corresponds to the center of the circle. When the common hole 413 has an elliptical shape, the center of the common hole 413 corresponds to the center of two focal points. When the common hole 413 is a polygon, the center of gravity of the polygon is referred to as the center of the common hole 413.

The main condensing lens 420 may assist with the radiation of light from the flash 400 to the outside in a wide range. The main condensing lens 420 may assist with the effective reach of light from the external light source to the plurality of light receiving elements 451 and 452. For example, the main condensing lens 420 may be a Fresnel lens including continuous concentric grooves etched into plastic. For example, a center (e.g., the concentric groove) of the main condensing lens 420 may be parallel to the central axis C of the common hole 413. The main condensing lens 420 may be attached to the cover 410 while maintaining a distance L1 from the flash 440, or may be directly attached to the flash 440.

The main condensing lens 420 may be connected to the cover 410 to cover the common hole 413 from the inside. The main condensing lens 420 may include a core part 421 inserted into the common hole 413, and a flange part 422 provided on a lower side of the core part 422, having a larger diameter than the core part 421, and facing the inner surface of the back cover 411. The adhesive layer 491 may attach the flange part 422 to the back cover 411. The adhesive layer 491 may be formed in a ring shape. The adhesive layer 491 may implement sealing to prevent and/or reduce water or a foreign substance from entering from the outside into the inner side of the cover 410.

The interposer 490 may be provided inside of the cover 410. For example, the interposer 490 may be arranged on the inner surface of the front cover 410 and face a bottom surface of the main condensing lens 420. The interposer 490 may include a power supply for supplying power to the flash 440 and the plurality of light receiving elements 451 and 452, a controller for controlling the flash 440, a VGA (e.g., the VGA 325 of FIG. 3) for controlling a gain of an output value of the plurality of light receiving elements 451 and 452, and a processor (e.g., the light source characteristic detector 340) for processing information in light received from the plurality of light receiving elements 451 and 452.

The PCB 430 may be arranged on a top surface of the interposer 490. The PCB 430 may support the flash 440 and the plurality of light receiving elements 451 and 452 which will be described in greater detail below. The PCB 430 may include a plurality of connection lines for electrically connecting to the various components provided in the interposer 490. The PCB 430 may be a silicon wafer, but is not limited thereto.

The flash 440 (e.g., the flash 220 of FIG. 2) may generate light and radiate the light to the outside to light the outside. The flash 440 may be arranged on the PCB 430. The distance L1 between the top surface of the flash 440 and the bottom surface of the main condensing lens 420 may act as a factor for increasing the performance of the flash 440. The distance L1 may be set, for example, in the range of about 0.2 mm to 0.8 mm. Meanwhile, the top surface of the flash 440 and the bottom surface of the main condensing lens 420 may be in contact with each other. By designing the interposer 490 in an appropriate height, the distance between the flash 440 and the main condensing lens 420 may be set. By arranging the power supply, the controller, the VGA, and the processor in the interposer 490 for setting the distance between the flash 440 and the main condensing lens 420, the light source detection device may be implemented to be more compact.

The flash 440 may be provided at a position parallel to the central axis C of the common hole 413 to effectively perform a flash function. Being parallel indicates that the central axis C of the common hole 413 passes through the flash 440. For example, the center of the flash 440 may be placed at a position through which the central axis C of the common hole 413 passes. By this structure, the light radiated from the flash 440 may pass through the common hole 413 and be symmetrically radiated to the outside.

The plurality of light receiving elements 451 and 452 (e.g., the plurality of light receiving elements 321 of FIG. 3) may receive light from the outside through the common hole 413. The plurality of light receiving elements 451 and 452 may be arranged on the PCB 430. The plurality of light receiving elements 451 and 452 may include a first light receiving element 451 provided at a position spaced apart from the flash 440 in a first direction D1, and a second light receiving element 452 provided at a position spaced apart from the flash 440 in a second direction D2 different from the first direction D1.

The first light receiving element 451 and the second light receiving element 452 may be arranged symmetrically with respect to the flash 440. For example, the first light receiving element 451 and the second light receiving element 452 may be provided on opposite sides with respect to the flash 440.

When the flash 440 is provided at a position parallel to the central axis C of the common hole 413, the plurality of light receiving elements 451 and 452 may be arranged at positions spaced apart from the central axis C. Even if the plurality of light receiving elements 451 and 452 are arranged at positions spaced apart from the central axis C, the plurality light receiving elements 451 and 452 may secure light receiving areas that are symmetric overall since the first light receiving element 451 and the second light receiving element 452 are arranged on opposite sides with respect to the central axis C. In other words, the plurality of light receiving elements may have angles of view that are symmetric with respect to the central axis C.

For example, the first light receiving element 451 may be spaced apart from the central axis C of the common hole 413 in the first direction D1 (-x direction). Since the common hole 413 is biased in the +x direction with respect to the first light receiving element 451, a light receiving area A1 of the first light receiving element 451 may be formed to be biased in the +x direction. As a result, the first light receiving element 451 may receive a relatively large amount of light from an area biased in the +x direction with respect to the central axis C and receive a relatively small amount of light from an area biased in the -x direction with respect to the central axis C.

Meanwhile, the second light receiving element 452 may be spaced apart from the central axis C of the common hole 413 in the second direction D2 (+x direction). Since the common hole 413 is biased in the -x direction with respect to the second light receiving element 452, a light receiving area A2 of the second light receiving element 452 may be formed to be biased in the -x direction. As a result, the second light receiving element 452 may receive a relatively large amount of light from the area biased in the -x direction with respect to the central axis C and receive a relatively small amount of light from the area biased in the +x direction with respect to the central axis C.

As the first light receiving element 451 and the second light receiving element 452 are arranged symmetrically with respect to the flash 440, the light receiving areas of the plurality of light receiving elements 451 and 452 may be formed symmetrically with respect to the central axis C of the common hole 413 overall. The light receiving area A1 of the first light receiving element 451 and the light receiving area A2 of the second light receiving element 452 may overlap each other in the vicinity of the central axis C. An area, of the light receiving area A1 of the first light receiving element 451, that does not overlap the light receiving area A2 of the second light receiving element 452 may be formed at a position spaced apart from the central axis C in the +x direction. An area, of the light receiving area A2 of the second light receiving element 452, that does not overlap the light receiving area A1 of the first light receiving element 451 may be formed at a position spaced apart from the central axis C in the -x direction.

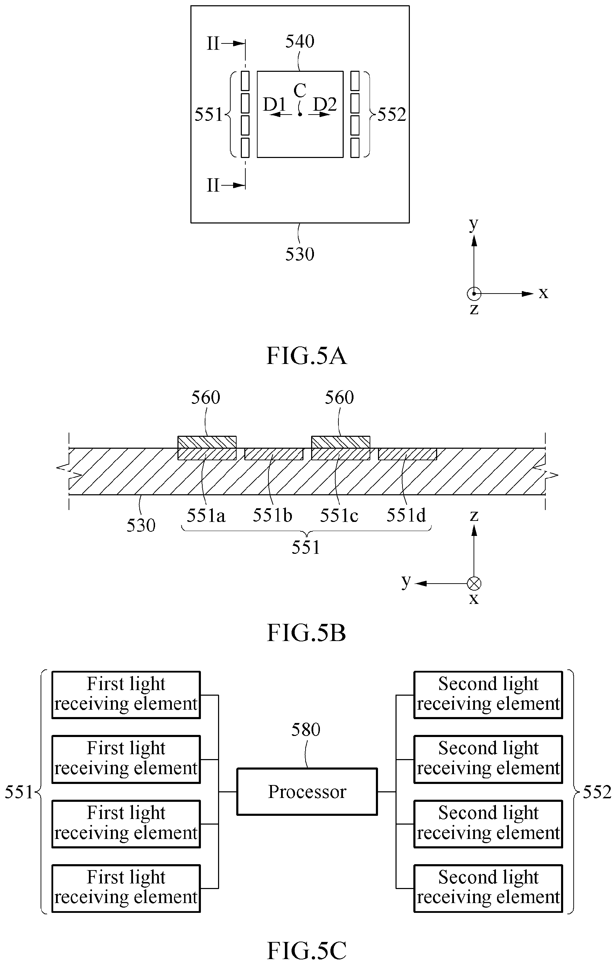

FIG. 5A is a diagram illustrating a PCB, a flash, and a plurality of light receiving elements according to various embodiments, FIG. 5B is a cross-sectional view taken along a line II-II of FIG. 5A according to various embodiments, and FIG. 5C is a block diagram illustrating an example configuration of a light source detection device according to various embodiments.

Referring to FIGS. 5A, 5B and 5C, a flash 540 and a plurality of light receiving elements 551 and 552 may be arranged on a PCB 530. The flash 540 may be arranged at a position parallel to a central axis C of a common hole (e.g., the common hole 413 of FIG. 4A). In other words, the central axis C may pass through the flash 540.

The plurality of light receiving elements 551 and 552 may be positioned symmetrically with respect to the flash 540. For example, the first light receiving element 551 and the second light receiving element 552 may be arranged on opposite sides with respect to the flash 540. The first light receiving element 551 may be placed at a position spaced apart from the flash 540 in a first direction D1 (-x direction), and the second light receiving element 552 may be placed at a position spaced apart from the flash in a second direction D2 (+x direction). For example, a distance between each of a plurality of first light receiving elements 551 and the flash 540 may be approximately the same, but is not limited thereto. For example, the distance between each of the plurality of first light receiving elements 551 and the flash 540 may be set individually appropriately. Likewise, a distance between each of a plurality of second light receiving elements 552 and the flash 540 may be approximately the same, but is not limited thereto.

The flash 540 having a square shape is illustrated, but the disclosure is not limited thereto. For example, the flash 540 may have another polygonal shape or a circular shape.

The first light receiving element 551 may include, for example, and without limitation, at least one of a phototransistor, a photodiode, a photo IC, or the like, arranged on the PCB 530, and may include any element for receiving light.

A photodiode will be briefly described as follows.

A photodiode may be a typical PN photodiode that is formed on a P-type silicon substrate to convert optical energy into electrical energy, and is configured by doping the silicon substrate with a P-type region and an N-type region forming a PN junction.

To form the PN junction, in the case of a typical bipolar process, the P-type region may be formed as a base, and the N-type region may be formed as N-epi or Emitter, and in the case of a typical CMOS process, the P-type region may be formed as P+ source/drain or P Sub, and the N-type region may be formed as N Well or N+ source/drain.

Likewise, the second light receiving element 552 may include, for example, and without limitation, at least one of a phototransistor, a photodiode, a photo IC, or the like formed on the PCB 530, and may include any element for receiving light. Of course, the first light receiving element and the second light receiving element may be the same or different in type.

Metal wires (not shown) may be arranged on the PCB 530 to transmit output signals to an ambient circuit, that is, the processor (e.g., including processing circuitry) 580 when signals obtained by converting light received by the first light receiving element 551 and the second light receiving element 552 arranged in the PCB 530 into electrical energy are output from the first light receiving element 551 and the second light receiving element 552. The metal wires may be intended to connect signals among the first light receiving element 551, the second light receiving element 552, and the ambient circuit, for example, the processor 580, and may be formed to connect to a portion of the first light receiving element and a portion of the second light receiving element 552. Of course, the metal wires may be formed in a single layer or in a plurality of layers.

Each of the first light receiving element 551 and the second light receiving element 552 may be provided in plurality. For example, an even number of (e.g., four) first light receiving elements 551 and second light receiving elements 552 may be provided, but the number is not limited thereto. The plurality of first light receiving elements 551 and the plurality of second light receiving elements 552 may be arranged in parallel in the y-axis direction, each in a line. For example, the plurality of first light receiving elements 551 may include four light receiving elements 551a, 551b, 551c, and 551d arranged in the y-axis direction.

The light source detection device may include a plurality of filters 560 covering a portion of the plurality of light receiving elements 551 and 552. For example, the plurality of filters 560 may cover a portion (e.g., a half) of the plurality of first light receiving elements 551 and cover a portion (e.g., a half) of the plurality of second light receiving elements 552. It should be noted that the filters 560 are not shown in FIG. 5A.

The filters 560 may receive incident light output from a light source, and pass light of a visible band among a wavelength band of the incident light. For example, the filters may each be a band-pass filter (BPF) that passes light of a wavelength band of 300 to 700 nanometers (nm).

Of the plurality of first light receiving elements 551, the first light receiving elements 551b and 551d not covered by the filters 560 may receive the incident light output from a light source, for example, a measured light source for which illumination intensity is to be measured, and output an electrical signal for the received incident light. The incident light may refer, for example, to light including visible and infrared bands. The first light receiving elements 551b and 551d not covered by the filters 560 may, for example, receive light having a wavelength in a range of about 400 to 1000 nm corresponding to the visible band and the infrared band.

Of the plurality of first light receiving elements 551, the first light receiving elements 551a and 551c covered by the filters 560 may, for example, receive light of the visible band for the measured light source passed by the filters 560, and output an electrical signal for the received light of the visible band. The first light receiving elements 551a and 551c covered by the filters 560 may, for example, receive light having a wavelength in a range of about 400 to 700 nm corresponding to the visible band.

Of the plurality of first light receiving elements 551, the first light receiving elements 551a and 551c covered by the filters 560 and the first light receiving elements 551b and 551d not covered by the filters 560 may be arranged alternately. For example, the first light receiving element 551a, the first light receiving element 551b, the first light receiving element 551c, and the first light receiving element 551d may be sequentially arranged. In other worlds, of the plurality of first light receiving elements 551, a first light receiving element covered by a filter 560 and a first light receiving element not covered by the filter 560 may be paired. The paired two first light receiving elements may be used to obtain a ratio of infrared components.

The same applies to the plurality of second light receiving elements 552. A portion (e.g., a half) of the second light receiving elements 552 may be covered by the filters 560 and receive light having a wavelength corresponding to the visible band. The other portion (e.g., the other half) of the second light receiving elements 552 may not be covered by the filters 560 and may receive light having a wavelength corresponding to the visible band and the infrared band.

The processor 580 (e.g., the light source characteristic detector 340 of FIG. 3) may include various processing circuitry and calculate an amount CH1 of first light received by the light receiving elements not covered by the filters 560, of the plurality of light receiving elements 551 and 552, an amount CH2 of second light received by the light receiving elements covered by the filters 560, and an index corresponding to the amount CH1 of the first light subtracted by the amount CH2 of the second light, and calculate a ratio of the index to the amount CH1 of the first light.

The processor 580 may calculate a ratio of infrared components in the incident light for the measured light source using electrical signals output from the plurality of first light receiving elements 551, and determine the type of the measured light source based on the calculated ratio of the infrared components. For example, the processor 580 may determine whether a light source measured in a light receiving area is a fluorescent light, an incandescent light, or sunlight, based on the ratio of the infrared components. For example, sunlight may have a relatively larger ratio of infrared components than an incandescent light, and a fluorescent light may have a relatively smaller ratio of infrared components than an incandescent light. An equation may be proportional to the first light receiving elements 551b and 551d and respective area ratios of the first light receiving elements 551b and 551d, and may be optimized in an actual set.

The processor 580 may transmit information on the type of the light source to an auto color adjustment controller (e.g., the auto color adjustment controller 350 of FIG. 3).

The ratio of the infrared components may be calculated, for each light source, by subtracting the amount CH2 of the light received by the first light receiving elements 551a and 551c covered by the filters 560 from the amount CH1 of the light received by the first light receiving elements 551b and 551d not covered by the filters 560 and dividing the result value by the amount CH1 of the light received by the first light receiving elements 551b and 551d. In other words, the ratio of the infrared components may be (CH1-CH2)/CH1.

For more precise ratio measurement in calculating the ratio of the infrared components, coefficients may be applied respectively to the amount CH1 of the light received by the first light receiving elements 551b and 551d not covered by the filters 560 and the amount CH2 of the light received by the first light receiving elements 551a and 551c covered by the filters 560. For example, the ratio of the infrared components may be (a*CH1-b*CH2)/CH1. Here, a and b may be the coefficients applied respectively to CH1 and CH2.

Likewise, the processor 580 may calculate a ratio of infrared components in the incident light for the measured light source using electrical signals output from the plurality of second light receiving elements 552, and determine the type of the measured light source based on the calculated ratio of the infrared components.

The processor 580 may separately calculate the ratio of infrared components for each of the plurality of first light receiving elements 551 and the plurality of second light receiving elements 552. Since a light receiving area of the plurality of first light receiving elements 551 is different from a light receiving area of the plurality of second light receiving elements 552, the processor 580 may individually determine the type of a light source for each light receiving area. For example, the processor 580 may determine that a light source corresponding to the light receiving area of the plurality of first light receiving elements 551 is an incandescent light and that a light source corresponding to the light receiving area of the plurality of second light receiving elements 552 is sunlight. Through the first light receiving elements 551 and the second light receiving elements 552 that are provided on opposite sides with respect to the flash 540 and have different light receiving areas, the processor 580 may determine the types and positions of the light sources. In this case, AWB may be individually applied to each area. When two or more light sources affect a picture, the processor 580 may provide a consumer with a picture to which more accurate AWB is applied. For example, when two different light sources exist, the processor 580 may discriminate among an area mainly affected by one of the two different light sources, an area mainly affected by the other one, and an area approximately evenly affected by both the light sources, and perform different AWB for each area.

The processor 580 may aggregate all pieces of information received by the plurality of first light receiving elements 551 and the plurality of second light receiving elements 552, and determine the types of the light sources in the overall light receiving area, in other words, a light receiving area corresponding to a combination of the light receiving area of the plurality of first light receiving elements 551 and the light receiving area of the plurality of second light receiving elements 552. According to this example configuration, the light source detection device may determine the types of light sources for light receiving areas of respective light receiving elements, and also determine the type of a light source in the overall light receiving area of all light receiving elements.

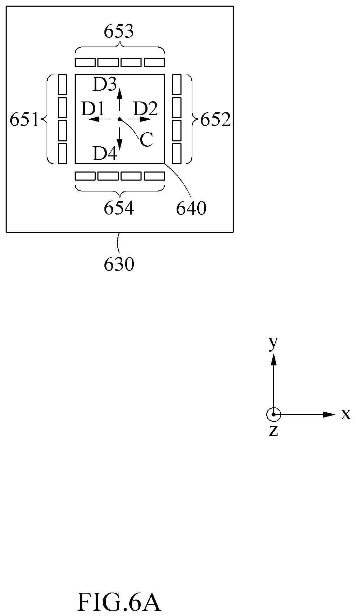

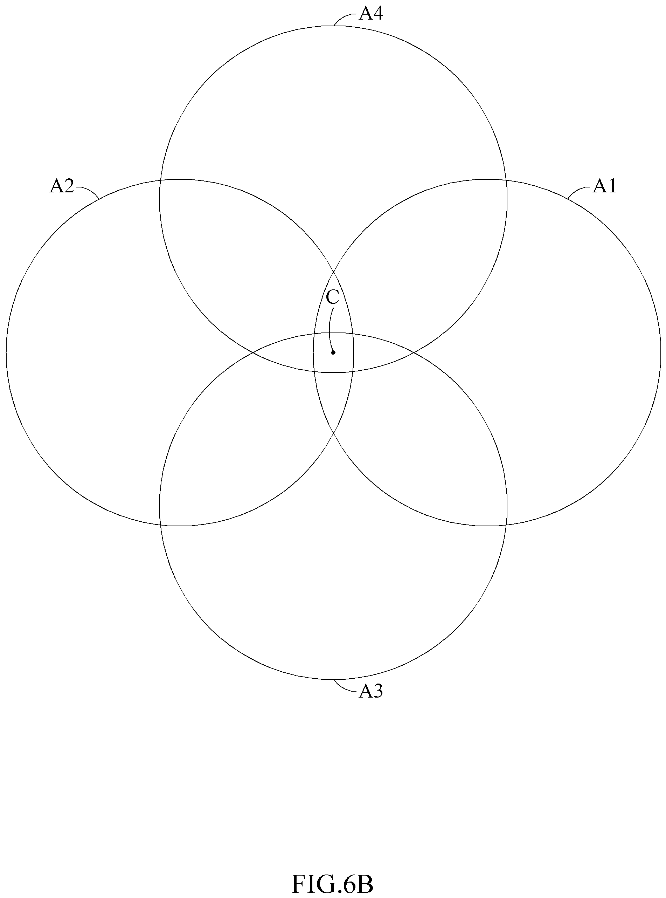

FIG. 6A is a diagram illustrating an example PCB, a flash, and a plurality of light receiving elements according to various embodiments, and FIG. 6B is a diagram illustrating example light receiving areas of a plurality of light receiving elements according to various embodiments.

Referring to FIGS. 6A and 6B, a flash 640 and a plurality of light receiving elements 651, 652, 653, and 654 may be arranged on a PCB 630. The plurality of light receiving elements 651, 652, 653, and 654 may be positioned in a manner of surrounding the flash 640. For example, the plurality of first light receiving elements 651 may be arranged at positions spaced apart from a central axis C of a common hole (e.g., the common hole 413 of FIG. 4B) in a first direction D1 (-x direction), the plurality of second light receiving elements 652 may be arranged at positions spaced apart from the central axis C of the common hole in a second direction D2 (+x direction), the plurality of third light receiving elements 653 may be arranged at positions spaced apart from the central axis C of the common hole in a third direction D3 (+y direction), and the plurality of fourth light receiving elements 654 may be arranged at positions spaced apart from the central axis C of the common hole in a fourth direction D4 (-y direction).

Each of the plurality of first light receiving elements 651, second light receiving elements 652, third light receiving elements 653, and fourth light receiving elements 654 may be provided in plurality. In the drawings, it is illustrated that the number of each of the plurality of first light receiving elements 651, second light receiving elements 652, third light receiving elements 653, and fourth light receiving elements 654 is four, but the number is not limited thereto.

Of each of the plurality of first light receiving elements 651, second light receiving elements 652, third light receiving elements 653, and fourth light receiving elements 654, a portion (e.g., a half) may be covered by filters (not shown, e.g., the filters 560 of FIG. 5B), and the other portion (e.g., the other half) may not be covered by the filters (not shown, e.g., the filters 560 of FIG. 5B). A light receiving element covered by a filter and a light receiving element not covered by the filter may be paired adjacently.

Each of the plurality of first light receiving elements 651, the second light receiving elements 652, the third light receiving elements 653, and the fourth light receiving elements 654 may have a different light receiving area. For example, the light receiving area of the first light receiving element 651 A1 may be formed to be biased from the central axis C of the common hole in the +x direction, the light receiving area of the second light receiving element 652 A2 may be formed to be biased from the central axis C of the common hole in the -x direction, the light receiving area of the third light receiving element 653 A3 may be formed to be biased from the central axis C of the common hole in the -y direction, and the light receiving area of the fourth light receiving element 654 A4 may be formed to be biased from the central axis C of the common hole in the +y direction. According to this structure, the light source detection device may have an overall symmetrical angle of view.

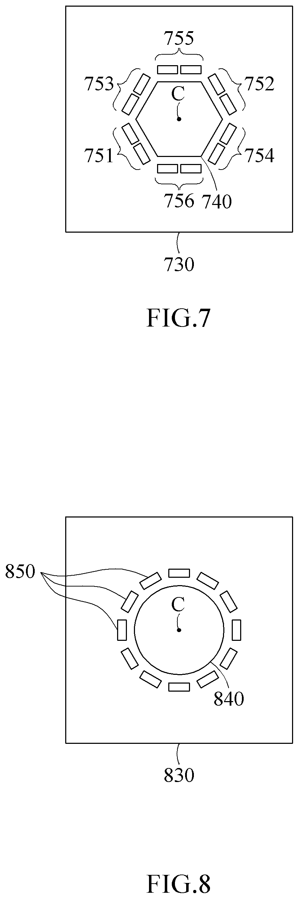

FIGS. 7, 8 and 9 are each diagrams illustrating examples of a PCB, a flash, and a plurality of light receiving elements according to various embodiments.

Referring to FIGS. 7, 8 and 9, a flash and a plurality of light receiving elements may vary in shape and arrangement.

Referring to FIG. 7, a flash 740 and a plurality of light receiving elements 751, 752, 753, 754, 755, and 756 may be arranged on a PCB 730. The flash 740 may be provided at a position parallel to a central axis C of a common hole, and may have a hexagonal shape. The plurality of light receiving elements 751, 752, 753, 754, 755, and 756 may be arranged to surround the flash 740. The first light receiving element 751 and the fourth light receiving element 754 may be provided on opposite sides with respect to the flash 740. The second light receiving element 752 and the fifth light receiving element 755 may be provided on opposite sides with respect to the flash 740. The third light receiving element 753 and the sixth light receiving element 756 may be provided on opposite sides with respect to the flash 740.

Respective light receiving areas of the first light receiving element 751 and the fourth light receiving element 754 may be different. For example, the respective light receiving areas of the first light receiving element 751 and the fourth light receiving element 754 may be symmetrical with respect to the central axis C of the common hole. Likewise, respective light receiving areas of the second light receiving element 752 and the fifth light receiving element 755 and respective light receiving areas of the third light receiving element 753 and the sixth light receiving element 756 may be different and symmetrical with respect to the central axis C of the common hole.

A portion (e.g., a half) of each of the plurality of light receiving elements 751, 752, 753, 754, 755, and 756 may be covered by filters (not shown, the filters 560 of FIG. 5B), and a light receiving element covered by a filter and a light receiving element not covered by the filter may be positioned adjacent.

Referring to FIG. 8, a flash 840 and a plurality of light receiving elements 850 may be arranged on a PCB 830. The flash 840 may be provided at a position parallel to a central axis C of a common hole, and may have a substantially circular shape. The plurality of light receiving elements 850 may be arranged to surround the flash 840.

A portion (e.g., a half) of the plurality of light receiving elements 850 may be covered by filters (not shown, the filters 560 of FIG. 5B), and a light receiving element covered by a filter and a light receiving element not covered by the filter may be positioned adjacent.

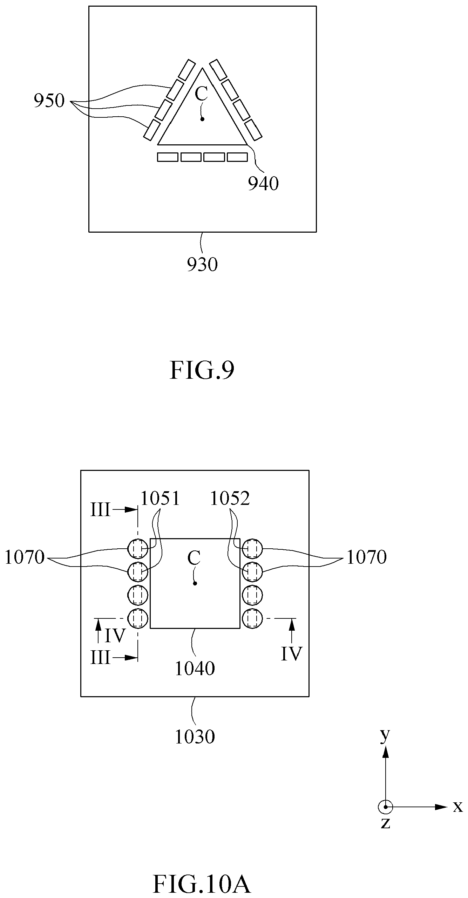

Referring to FIG. 9, a flash 940 and a plurality of light receiving elements 950 may be arranged on a PCB 930. The flash 940 may be provided at a position parallel to a central axis C of a common hole, and may have a triangular shape. The plurality of light receiving elements 950 may be arranged to surround the flash 940.

A portion (e.g., a half) of the plurality of light receiving elements 950 may be covered by filters (not shown, the filters 560 of FIG. 5B), and a light receiving element covered by a filter and a light receiving element not covered by the filter may be positioned adjacent.

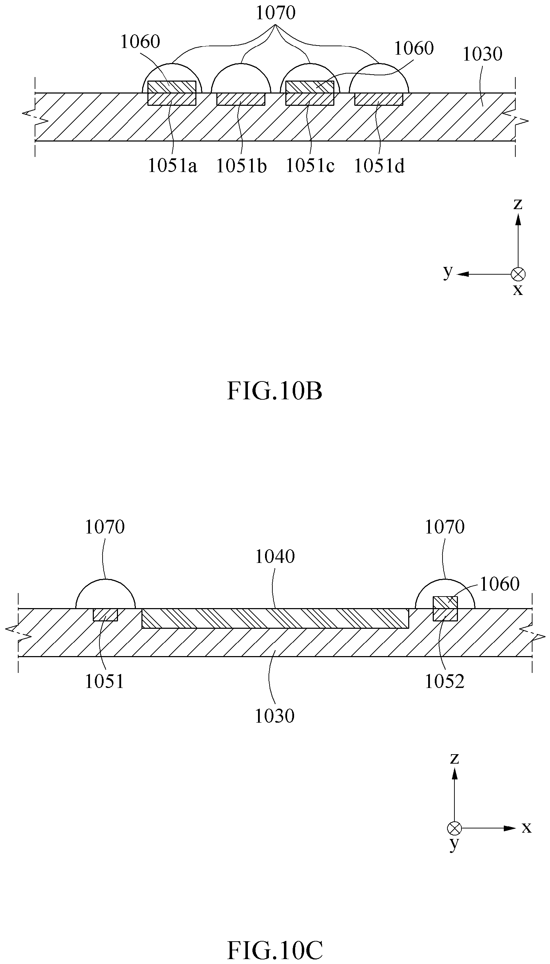

FIG. 10A is a diagram illustrating a PCB, a flash, and a plurality of light receiving elements according to various embodiments, FIG. 10B is a cross-sectional view taken along a line III-III of FIG. 10A according to various embodiments, and FIG. 10C is a cross-sectional view taken along a line IV-IV of FIG. 10A according to various embodiments.

Referring to FIGS. 10A, 10B and 10C, a flash 1040 may be arranged on a PCB 1030 and at a position parallel to a central axis C of a common hole (not shown, e.g., the common hole 413 of FIG. 4B). A plurality of light receiving elements 1051 and 1052 may be arranged on the PCB 1030. The first light receiving element 1051 and the second light receiving element 1052 may be positioned on opposite sides with respect to the flash 1040.

A light source detection device may include a plurality of sub-condensing lenses 1070 covering at least a portion of the plurality of light receiving elements 1051 and 1052. The sub-condensing lens 1070 may focus light reaching upper sides of the plurality of light receiving elements 1051 and 1052 on the plurality of light receiving elements 1051 and 1052. The sub-condensing lens 1070 may increase light concentration efficiency, thereby increasing the light source determination accuracy of the light source detection device.

The plurality of sub-condensing lenses 1070 may cover a plurality of first light receiving elements 1051. The plurality of sub-condensing lenses 1070 may cover first light receiving elements 1051a and 1051c covered by filters 1060 and first light receiving elements 1051b and 1051d not covered by the filters 1060.

Referring to FIG. 10C, it is shown that in relation to a first light receiving element 1051 and a second light receiving element 1052 positioned on opposite sides with respect to the flash 1040, one light receiving element (e.g., the first light receiving element 1051) is not covered by a filter 1060 and the other one light receiving element (e.g., the second light receiving element 1052) is covered by the filter 1060. However, example embodiments are not limited thereto.

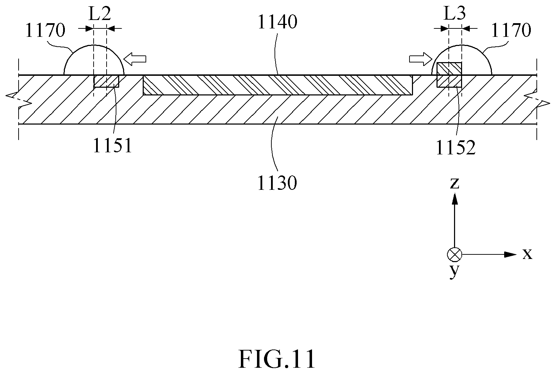

FIG. 11 is a cross-sectional view illustrating an example light source detection device according to various embodiments.

Referring to FIG. 11, a flash 1040, a plurality of light receiving elements 1151 and 1152, and sub-condensing lenses 1170 may be arranged on a PCB 1030. A center of a sub-condensing lens 1170 may be shifted by a predetermined (e.g., specified) distance from a center of the light receiving element 1151, 1152 covered by the sub-condensing lens 1170.

For example, the sub-condensing lens 1170 covering the first light receiving element 1151 may be spaced apart from a central axis of the first light receiving element 1151 by a distance L2 in a direction away from the flash 1140. The sub-condensing lens 1170 covering the second light receiving element 1152 may be spaced apart from a central axis of the second light receiving element 1152 by a distance L3 in a direction away from the flash 1140. For example, the distance L2 and the distance L3 may be values between approximately 0.1 mm and 5 mm. According to this structure, respective light receiving areas of the plurality of light receiving elements 1151 and 1152 may be expanded.

As another example (not shown), the sub-condensing lens 1170 covering the first light receiving element 1151 may be spaced apart from the central axis of the first light receiving element 1151 by the distance L2 in a direction toward the flash 1140. The sub-condensing lens 1170 covering the second light receiving element 1152 may be spaced apart from a central axis of the second light receiving element 1152 by a distance L3 in a direction toward the flash 1140. According to this structure, the light concentration efficiency of the plurality of light receiving elements 1151 and 1152 may be increased.

Although the sub-condensing lens 1170 facing upward is illustrated, example embodiments are not limited thereto. For example, the central axis of the sub-condensing lens 1170 may intersect with a normal direction of a top surface of the flash 1130. In other words, the orientation of the sub-condensing lens 1170 may be appropriately set.

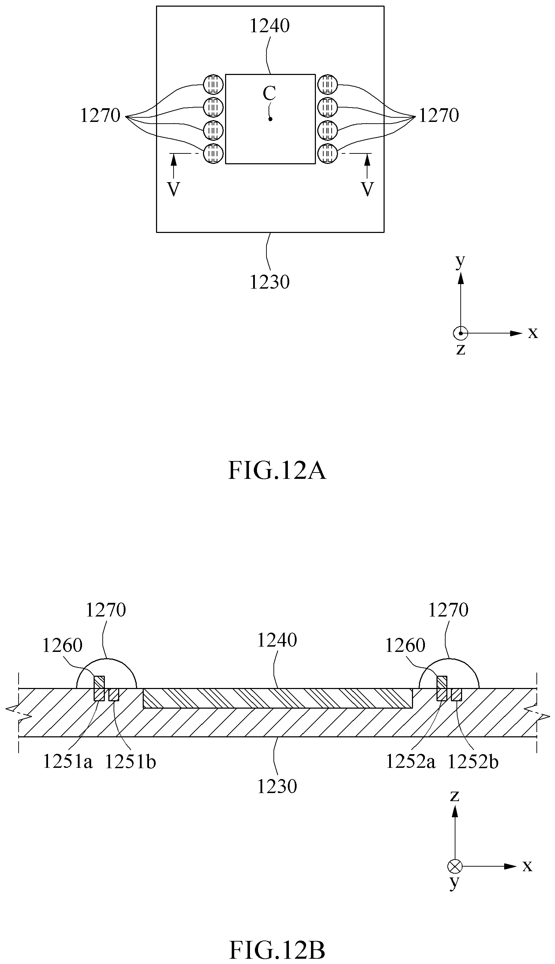

FIG. 12A is a is a diagram illustrating a PCB, a flash, and a plurality of light receiving elements according to various embodiments, and FIG. 12B is a cross-sectional view of a light source detection device according to various embodiments.

Referring to FIGS. 12A and 12B, a flash 1240 may be arranged on a PCB 1230 and at a position parallel to a central axis C of a common hole (not shown, e.g., the common hole 413 of FIG. 4B). On the PCB 1230, a plurality of first light receiving elements 1251a and 1251b and a plurality of second light receiving elements 1252a and 1252b may be arranged on opposite sides with respect to the flash 1240. A plurality of sub-condensing lenses 1270 for covering the plurality of light receiving elements may be arranged on the PCB 1230.

One of the plurality of sub-condensing lenses 1270 may cover a plurality of light receiving elements. For example, one sub-condensing lens 1270 may cover the first light receiving element 1251a covered by a filter 1260 and the first light receiving element 1251b not covered by the filter 1260 at the same time.

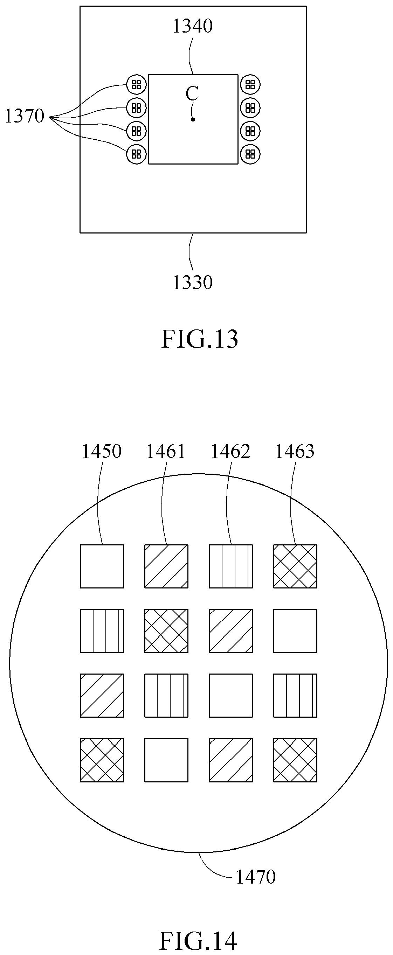

FIG. 13 is a diagram illustrating a PCB, a flash, and a plurality of light receiving elements according to various embodiments.

Referring to FIG. 13, a flash 1340, a plurality of light receiving elements, and a plurality of sub-condensing lenses 1370 may be arranged on a PCB 1330. One of the plurality of sub-condensing lenses 1370 may cover, for example, four light receiving elements. Of the four light receiving elements, a portion (e.g., a half) may be covered by a filter (not shown), and the other portion (e.g., the other half) may not be covered by the filter (not shown). In other words, for light receiving elements covered by the sub-condensing lens 1370, a light receiving element covered by the filter and a light receiving element not covered by the filter may be paired.

FIG. 14 is a diagram illustrating a sub-condensing lens, a plurality of lenses, and a plurality of light receiving elements according to various embodiments.

Referring to FIG. 14, a sub-condensing lens 1470 may cover, for example sixteen light receiving elements 1450. Of the sixteen light receiving elements 1460, four light receiving elements 1450 may be provided in a state of not being covered by a filter. A plurality of filters 1461, 1462, and 1463 may cover the remaining twelve light receiving elements 1450. For example, the first filter 1461 may cover four light receiving elements, the second filter 1462 may cover another four light receiving elements, and the third filter 1463 may cover the other four light receiving elements.

The first filter 1461, the second filter 1462, and the third filter 1463 may each include a BPF that passes light of a predetermined (e.g., specified) wavelength band. For example, the first filter 1461 may be a BPF that passes light of a wavelength band of 610 to 615 nm to pass red in light, the second filter 1462 may be a BPF that passes light of a wavelength band of 550 to 555 nm to pass green in light, and the third filter 1463 may be a BPF that passes light of a wavelength band of 450 to 455 nm to pass blue in light.

Based on information in light received through the plurality of filters 1461, 1462, and 1463, a light source detection device may analyze the spectrum of a light source.

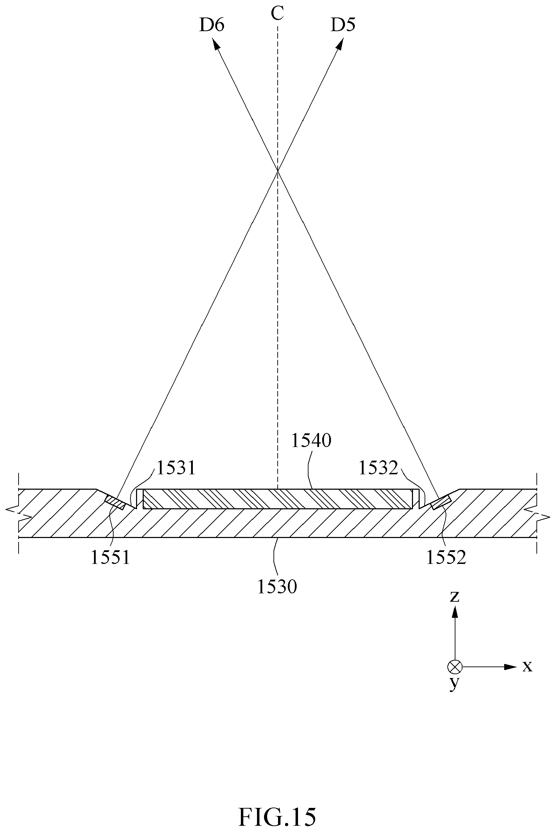

FIG. 15 is a cross-sectional view of a PCB, a flash, and a plurality of light receiving elements according to various embodiments.

Referring to FIG. 15, a PCB 1530 may include inclined surfaces 1531 and 1532. For example, the first inclined surface 1531 and the second inclined surface 1532 may be provided on opposite sides with respect to a flash 1540. A plurality of light receiving elements 1551 and 1552 may be arranged on the first inclined surface 1531 and the second inclined surface 1532, respectively.

A normal direction of the first light receiving element 1551 D5 and a normal direction of the second light receiving element 1552 D6 may each intersect with a central axis C of a common hole (not shown, e.g., the common hole 413 of FIG. 4B). According to this structure, the light concentration efficiency of the plurality of light receiving elements 1551 and 1552 may be increased.

According to various example embodiments, a light source detection device may include: a cover including a common hole; a main condensing lens connected to the cover covering the common hole 413; a printed circuit board (PCB) provided inside the cover; a flash arranged on the PCB at a position parallel to a central axis of the common hole and configured to radiate light to an outside through the common hole; and a plurality of light receiving elements comprising light receiving circuitry arranged on the PCB symmetrically about the flash 440.

According to various example embodiments, the plurality of light receiving elements may include: a plurality of first light receiving elements provided at positions spaced apart from the flash in a first direction; and a plurality of second light receiving elements provided at positions spaced apart from the flash in a second direction different from the first direction.

According to various example embodiments, the light source detection device may further include a plurality of filters covering a portion of the plurality of first light receiving elements and a portion of the second light receiving elements.

According to various example embodiments, the filters may be configured to pass light of a visible band among light received through the common hole.

According to various example embodiments, light receiving elements covered by the filters and light receiving elements not covered by the filters may be alternately arranged.

According to various example embodiments, the light source detection device may further include a processor configured to calculate an amount of first light received by light receiving elements not covered by the filters, an amount of second light received by light receiving elements covered by the filters, and an index corresponding to the amount of the first light subtracted by the amount of the second light, and calculate a ratio of the index to the amount of the first light.

According to various example embodiments, the processor may be configured to individually calculate the ratio for each of the plurality of first light receiving elements and the plurality of second light receiving elements.

According to various example embodiments, first light receiving areas of the first light receiving elements through the common hole may be different from second light receiving areas of the second light receiving elements through the common hole.

According to various example embodiments, the light receiving areas of the first light receiving elements and the light receiving areas of the second light receiving elements may be symmetrical to each other with respect to the central axis of the common hole.

According to various example embodiments, the plurality of light receiving elements may be arranged to surround the flash.

According to various example embodiments, the light source detection device may further include a filter covering at least one of the plurality of light receiving elements.

According to various example embodiments, the light source detection device may further include a plurality of sub-condensing lenses covering the plurality of light receiving elements.

According to various example embodiments, central axes of the sub-condensing lenses may be spaced apart from central axes of the light receiving elements.

According to various example embodiments, normal directions of top surfaces of the light receiving elements may be inclined with respect to the central axis of the common hole.

According to various example embodiments, a device capable of simultaneously performing a lighting function and a light source detection function through a common hole may include: a printed circuit board (PCB) arranged in a cover; a flash arranged on the PCB; and a plurality of light receiving elements arranged on the PCB symmetrically about the flash and configured to receive light through a common hole.

According to various example embodiments, a device capable of simultaneously performing a lighting function and a light source detection function through a common hole may include: a cover including a common hole; a main condensing lens connected to the cover covering the common hole; a printed circuit board (PCB) provided inside the cover; a flash arranged on the PCB at a position parallel to a central axis of the common hole and configured to radiate light to an outside through the common hole; a plurality of first light receiving elements provided at positions spaced apart from the flash in a first direction; a plurality of second light receiving elements provided at positions spaced apart from the flash in a second direction opposite to the first direction; and a plurality of filters covering a half of the plurality of first light receiving elements and a half of the second light receiving elements and configured to pass light of a visible band.

**Claims**

1. A device capable of simultaneously performing a lighting function and a light source detection function through a common hole, the device comprising:

a cover comprising a common hole;

a main condensing lens connected to the cover and covering the common hole;

a printed circuit board provided inside the cover;

a flash arranged on the printed circuit board at a position parallel to a central axis of the common hole and configured to radiate light to an outside through the common hole; and

a plurality of light receiving elements arranged on the printed circuit board symmetrically about the flash.

2. The device of claim 1, wherein the plurality of light receiving elements comprise:

a plurality of first light receiving elements provided at positions spaced apart from the flash in a first direction; and

a plurality of second light receiving elements provided at positions spaced apart from the flash in a second direction different from the first direction.

3. The device of claim 2, further comprising:
a plurality of filters covering a portion of the plurality of first light receiving elements and a portion of the second light receiving elements.

4. The device of claim 3, wherein the filters are configured to pass light of a visible band of light received through the common hole.

5. The device of claim 3, wherein light receiving elements covered by the filters and light receiving elements not covered by the filters are alternately arranged.

6. The device of claim 3, further comprising:
a processor configured to calculate: an amount of first light received by the light receiving elements not covered by the filters, an amount of second light received by the light receiving elements covered by the filters, an index corresponding to the amount of the first light subtracted by the amount of the second light, and a ratio of the index to the amount of the first light.

7. The device of claim 6, wherein the processor is configured to individually calculate the ratio for each of the plurality of first light receiving elements and the plurality of second light receiving elements.

8. The device of claim 2, wherein first light receiving areas of the first light receiving elements through the common hole are different from second light receiving areas of the second light receiving elements through the common hole.

9. The device of claim 8, wherein the light receiving areas of the first light receiving elements and the light receiving areas of the second light receiving elements are symmetrical to each other with respect to the central axis of the common hole.

10. The device of claim 1, wherein the plurality of light receiving elements are arranged to surround the flash.

11. The device of claim 10, further comprising:
a filter covering at least one of the plurality of light receiving elements.

12. The device of claim 1, further comprising:
a plurality of sub-condensing lenses covering the plurality of light receiving elements.

13. The device of claim 12, wherein central axes of the sub-condensing lenses are spaced apart from central axes of the light receiving elements.

14. The device of claim 1, wherein normal directions of top surfaces of the light receiving elements are inclined with respect to the central axis of the common hole.

15. The device of claim 1, further comprising:

a first filter covering a portion of the plurality of light receiving elements and configured to pass light of a first band; and

a second filter covering another portion of the plurality of light receiving elements and configured to pass light of a second band.

Electronic device 101

Memory 130
Volatile memory 132
Non-volatile memory 134
Internal memory 136
External memory 138

Program 140
Application 146
Middleware 144
OS 142

Input module 150

Sound output module 155

Display module 160

Battery 189

Processor 120
Main processor 121
Auxiliary processor 123

Power management module 188

Communication module 190
Wireless communication module 192
Wired communication module 194

Antenna module 197

SIM 196

Audio module 170

Sensor module 176

Interface 177

Connecting terminal 178

Haptic module 179

Camera module 180

Second network 199

First network 198

Electronic device 104

Electronic device 102

Server 108

100

FIG.1

200

Camera module 280

220
Flash

210
Lens assembly

230
Image sensor

240
Image stabilizer

250
Memory

260
ISP

FIG.2

FIG.3

EP 4 319 125 A1

FIG.4A

FIG.4B

FIG.4C

II→     540

551{    C
      D1   D2     }552

530

y
↑
→ x
z (⊙)

FIG.5A

560          560

530   551a   551b   551c   551d

551

z
↑
y ← ⊗ x

FIG.5B

| First light receiving element | | Second light receiving element |
|---|---|---|
| First light receiving element | 580 | Second light receiving element |
| First light receiving element | Processor | Second light receiving element |
| First light receiving element | | Second light receiving element |

551{          }552

FIG.5C

FIG.6A

FIG.6B

FIG.7

FIG.8

FIG.9

FIG.10A

FIG.10B

FIG.10C

FIG.11

FIG.12A

FIG.12B

1340

1370

C

1330

FIG.13

1450 1461 1462 1463

1470

FIG.14

FIG.15

## INTERNATIONAL SEARCH REPORT

| International application No. |
|---|
| **PCT/KR2022/001880** |

**A. CLASSIFICATION OF SUBJECT MATTER**

**H04N 5/225**(2006.01)i; **H04N 9/73**(2006.01)i; **G03B 15/05**(2006.01)i; **G03B 30/00**(2021.01)i; **H04M 1/22**(2006.01)i

According to International Patent Classification (IPC) or to both national classification and IPC

**B. FIELDS SEARCHED**

Minimum documentation searched (classification system followed by classification symbols)

H04N 5/225(2006.01); A61B 5/00(2006.01); G06F 3/042(2006.01); G06K 9/00(2006.01); H01L 23/02(2006.01); H01L 23/04(2006.01); H01L 27/146(2006.01); H01L 31/10(2006.01); H04M 1/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 홀(hole), 중심축(central axis), 플래쉬(flash), 수광 소자(light receiving element), 광원(light source)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0113421 A (SAMSUNG ELECTRONICS CO., LTD.) 16 October 2018 (2018-10-16)<br>See paragraphs [0028] and [0044]; and figures 3a-3b. | 1-15 |
| Y | KR 10-2008-0011517 A (KODENSHI KOREA CORP.) 05 February 2008 (2008-02-05)<br>See paragraphs [0041]-[0042]; claim 8; and figure 2a. | 1-15 |
| Y | KR 10-2020-0044536 A (PARTRON CO., LTD.) 29 April 2020 (2020-04-29)<br>See paragraphs [0033]-[0034] and [0036]; and figures 1-2. | 3-9,11,15 |
| Y | KR 10-2006-0078059 A (MAGNACHIP SEMICONDUCTOR, LTD.) 05 July 2006 (2006-07-05)<br>See claim 3. | 12-13 |
| A | KR 10-2019-0066433 A (SAMSUNG ELECTRONICS CO., LTD.) 13 June 2019 (2019-06-13)<br>See paragraphs [0069]-[0093]; and figures 4-5. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 April 2022** | **03 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/001880**

| Patent document cited in search report | | | Publication date (day/month/year) | Patent family member(s) | | | Publication date (day/month/year) |
|---|---|---|---|---|---|---|---|
| KR | 10-2018-0113421 | A | 16 October 2018 | EP | 3590250 | A1 | 08 January 2020 |
| | | | | EP | 3590250 | B1 | 11 November 2020 |
| | | | | KR | 10-2373308 | B1 | 11 March 2022 |
| | | | | US | 10462272 | B2 | 29 October 2019 |
| | | | | US | 2018-0295222 | A1 | 11 October 2018 |
| | | | | WO | 2018-186689 | A1 | 11 October 2018 |
| KR | 10-2008-0011517 | A | 05 February 2008 | KR | 10-0820627 | B1 | 10 April 2008 |
| KR | 10-2020-0044536 | A | 29 April 2020 | KR | 10-2209580 | B1 | 29 January 2021 |
| KR | 10-2006-0078059 | A | 05 July 2006 | | None | | |
| KR | 10-2019-0066433 | A | 13 June 2019 | US | 2019-0172875 | A1 | 06 June 2019 |
| | | | | WO | 2019-112213 | A1 | 13 June 2019 |

Form PCT/ISA/210 (patent family annex) (July 2019)